# EUROPÄISCHE PATENTANMELDUNG

(11) **EP 1 288 677 A2**
(43) Veröffentlichungstag der Anmeldung: **05.03.2003**
(21) Anmeldenummer: 02019586.3
(22) Anmeldetag: 02.09.2002
(51) Int. Cl.: G01S 17/89, G07C 5/08

(54) **Optoelektronische Erfassungseinrichtung mit einer Speichereinrichtung**

(30) Priorität: 03.09.2001 DE 10143059
(71) Anmelder: Sick AG, 79183 Waldkirch, Breisgau (DE)
(72) Erfinder: Hipp, Johann, 22931 Hamburg (DE)
(74) Vertreter: Manitz, Finsterwald & Partner GbR

(57) **Zusammenfassung**

Die Erfindung betrifft eine optoelektronische Erfassungseinrichtung für ein Kraftfahrzeug mit einer Speichereinrichtung, in der während des Betriebs des Kraftfahrzeuges kontinuierlich oder in zeitlich kurzen Abständen von der als Laserscanner ausgebildeten optoelektronischen Erfassungseinrichtung erfaßte, die Fahrzeugumgebung betreffende Informationen speicherbar sind, und ein Verfahren zum Speichern von Informationen in der Speichereinrichtung.

## Beschreibung

Die Erfindung betrifft eine optoelektronische Erfassungseinrichtung für ein Kraftfahrzeug mit einer Speichereinrichtung, in der von der optoelektronischen Erfassungseinrichtung erfaßte, die Fahrzeugumgebung betreffende Informationen speicherbar sind.

Derartige optoelektronische Erfassungseinrichtungen, die gemäß Stand der Technik beispielsweise als Laserscanner ausgebildet werden können, sind grundsätzlich bekannt. Sie sollen in Kraftfahrzeugen beispielsweise eingesetzt werden, um die Fahrsicherheit durch die Messung des Abstandes zu vorausfahrenden Fahrzeugen zu erhöhen. So kann durch die Abstandsmessung zu einem vorausfahrenden Fahrzeug beispielsweise vor Auffahrunfällen gewarnt werden. Des weiteren kann die Erfassungseinrichtung insbesondere bei großen und unübersichtlichen Fahrzeugen für eine Überwachung des toten Winkels, für eine Einparkhilfe oder als Sicherheitssensor, z. B. beim Rechtsabbiegen eines LKWs, genutzt werden.

Der Erfindung liegt die Aufgabe zugrunde, eine optoelektronische Erfassungseinrichtung der eingangs genannten Art zu schaffen, welche die Rekonstruktion eines Unfallhergangs ermöglicht.

Zur Lösung der Aufgabe ist eine optoelektronische Erfassungseinrichtung mit den Merkmalen des Anspruchs 1 vorgesehen.

Die erfindungsgemäße optoelektronische Erfassungseinrichtung für ein Kraftfahrzeug weist eine Speichereinrichtung auf, in der während des Betriebs des Kraftfahrzeuges kontinuierlich oder in zeitlich kurzen Abständen von der als Laserscanner ausgebildeten optoelektronischen Erfassungseinrichtung erfaßte, die Fahrzeugumgebung betreffende Informationen speicherbar sind, wobei die Menge der in der Speichereinrichtung speicherbaren Informationen begrenzt ist und bei voller Speichereinrichtung die jeweils älteste gespeicherte Information durch eine neue zu speichernde Information überschreibbar ist.

Aufgrund dieser Ausbildung der erfindungsgemäßen optoelektronischen Erfassungseinrichtung werden regelmäßig die neuesten, die Fahrzeugumgebung charakterisierenden, dreidimensionalen, Abstands- und/oder Positionsinformationen enthaltenden Daten und insbesondere auch die zeitliche Entwicklung der Fahrzeugumgebung, bzw. der sie repräsentierenden Daten, in einer Speichereinrichtung gespeichert. Ältere Informationen werden jeweils durch aktuelle, neuere Informationen überschrieben. Speicherbar sind dabei die detektierten Rohdaten, beispielsweise Abstands- und/oder Winkelinformationen bezüglich sich in der Fahrzeugumgebung befindlicher Objekte oder Personen, und/oder auch Musterhypothesen, d.h. die mit Hilfe eines Mustererkennungsalgorithmus identifizierten Kraftfahrzeuge, Motorräder, Personen, etc.

Die Speicherung der zeitlichen Veränderung der Fahrzeugumgebung unmittelbar vor einem Unfall, insbesondere die Speicherung der zeitlichen Entwicklung der Abstandswerte zwischen den Unfallparteien oder der Positionswerte der Unfallparteien, ermöglicht eine genaue Analyse einer Unfallsituation. Darüber hinaus erlaubt die Speicherung von Informationen über die Anordnung von Objekten und Personen in der Fahrzeugumgebung und insbesondere auch von Informationen über die Relativbewegung von Objekten und Personen in der Fahrzeugumgebung zueinander unmittelbar vor dem Unfall eine genaue Rekonstruktion des Unfallhergangs.

Eine erfindungsgemäße optoelektronische Erfassungseinrichtung ermöglicht folglich eine genaue Analyse eines Unfallhergangs und kann somit zur Klärung der Schuldfrage im Falle eines Unfalls beitragen. Dies erweist sich nicht nur für die Versicherer von Kraftfahrzeugen, die im Falle eines Unfalls möglicherweise Schadensersatz zu leisten haben, von Vorteil, sondern auch für einen Versicherungsnehmer, der durch eine eindeutige Klärung eines Unfallhergangs möglicherweise verhindern kann, daß er nach dem Unfall eine höhere Versicherungsprämie zu zahlen hat.

Erfindungsgemäß wird bei voller Speichereinrichtung die jeweils älteste gespeicherte Information durch eine neue zu speichernde Information überschrieben. Je nach gewünschter Menge der zu speichernden Information ermöglicht dies die Verwendung einer Speichereinrichtung mit begrenzter Speicherkapazität, wobei gleichzeitig sichergestellt ist, daß die für die Rekonstruktion eines Unfallhergangs entscheidenden Sekunden oder Minuten vor dem Unfall auf jeden Fall gespeichert sind. So kann die Speicherkapazität beispielsweise gerade so gewählt werden, daß zu jedem Zeitpunkt die zeitliche Entwicklung der Fahrzeugumgebung über einen unmittelbar vorhergehenden Zeitraum von 30 Sekunden gespeichert ist. Der Speicher wird somit regelmäßig aktualisiert, wobei eine Information, die älter als 30 Sekunden ist, jeweils mit einer neuen Information überschrieben wird.

Die zu speichernde Information kann mit der gleichen Frequenz gespeichert werden, mit welcher beispielsweise ein Laserscanner seine Scans durchführt (also Lichtpulse im gesamten Scanbereich aussendet).

Erfindungsgemäß ist eine Speicherung von Informationen während des Betriebs des Kraftfahrzeuges vorgesehen. Dies ermöglicht die Rekonstruktion von insbesondere solchen Unfällen, in die das Fahrzeug während seines Betriebs verwickelt war. Es ist darüber hinaus aber auch denkbar, eine Speicherung von Informationen während des Parkens des Fahrzeugs durchzuführen, um die Beschädigung eines abgestellten Fahrzeugs festzuhalten.

In einer vorteilhaften Ausführungsform der erfindungsgemäßen optoelektronischen Erfassungseinrichtung kann die Speichereinrichtung einen Ringspeicher aufweisen und insbesondere als Ringspeicher aufgebaut sein. In einem Ringspeicher läßt sich besonders gut eine vorbestimmte Menge von Informationen speichern, wobei sich ein Ringspeicher gerade dadurch auszeichnet, daß durch eine neue zu speichernde Information die jeweils älteste gespeicherte Information überschrieben wird.

In einer weiteren Variante der Erfindung weist die Speichereinrichtung ein nach dem FIFO-Prinzip arbeitendes Schieberegister auf. Ein derartiges Schieberegister stellt eine weitere einfache Möglichkeit dar, die Speicherung von die Fahrzeugumgebung betreffenden Informationen über einen vorbestimmten Zeitraum vor einem Unfall sicherzustellen.

Vorteilhafterweise ist die Speichereinrichtung mit einer Fahrezeugelektronik verbunden. Dies ermöglicht nicht nur die zusätzliche Speicherung des zeitlichen Verlaufs von fahrzeugrelevanter Information, wie Fahrzeuggeschwindigkeit, Beschleunigung, Lenkwinkel, Bremskraft, etc., sondern auch die Verbindung mit Beschleunigungssensoren, die beispielsweise aufgrund einer Verzögerung des Fahrzeugs, z.B. bei einem Auffahrunfall, den Speichervorgang abbrechen können.

Wie bereits erwähnt, sind bevorzugt in der Speichereinrichtung zusätzlich zu den vom Laserscanner gelieferten Informationen zeitliche Verläufe von fahrzeugspezifischen Informationen, wie Fahrzeuggeschwindigkeit, Beschleunigung, Lenkwinkel, Bremskraft, etc., speicherbar. Durch die Speicherung derartiger Informationen wird die Rekonstruktion eines Unfallhergangs weiter verbessert, da bei Kenntnis der eigenen Fahrzeuggeschwindigkeit über die Relativbewegung von in der Umgebung befindlichen Objekten zum eigenen Fahrzeug auf deren absolute Geschwindigkeit zurück geschlossen werden kann und somit eine Überschreitung von Geschwindigkeitsbeschränkungen festgestellt werden kann.

In einer besonders vorteilhaften Ausführung der Erfindung ist der Speichervorgang durch mindestens ein vorbestimmtes Ereignis und insbesondere durch eine unfallbedingte Beschleunigung oder Verzögerung des Fahrzeuges abbrechbar. Der Abbruch des Speichervorgangs bei einem Unfall ist besonders wichtig, damit die entscheidenden Informationen über den Unfallhergang, insbesondere in den Sekunden oder Minuten vor dem Unfall, erhalten bleiben. Eine Rekonstruktion des Unfalls wäre nicht möglich, wenn der Speichervorgang auch nach dem Unfall fortgesetzt würde und die unfallrelevante Informationen aus der Zeit vor dem Unfall durch belanglose Informationen aus der Zeit nach dem Unfall überschrieben würden.

Bevorzugt ist der Speichervorgang mit einer insbesondere konstanten zeitlichen Verzögerung gegenüber dem vorbestimmten Ereignis abbrechbar. Dadurch können die Fahrzeugumgebung betreffende Informationen über einen vorbestimmten, z. B. individuell vorgebbaren Zeitraum auch nach dem Ereignis oder der Auslösung des Airbags gespeichert werden, so daß Bewegungen der an einem Unfall beteiligten Objekte oder Personen, wie beispielsweise das Rutschen eines oder mehrere Fahrzeuge, bis zu ihrem Stillstand rekonstruierbar sind.

Vorteilhafterweise ist der Speichervorgang durch den Auslösemechanismus eines Airbags abbrechbar. Auf diese Weise läßt sich zum einen für den Abbruch des Speichervorgangs auf bereits bestehende Sicherheitstechnik im Kraftfahrzeug zurückgreifen und zum anderen der für den Abbruch des Speichervorgangs entscheidende Zeitpunkt des Unfallbeginns zeitlich an die Auslösung des Airbags koppeln.

Nach einer weiteren Ausbildung der Erfindung sind die gespeicherten Informationen nach einem Abbruch des Speichervorgangs statisch speicherbar und durch eine externe Ausleseeinrichtung auslesbar. Alternativ ist es möglich, die Informationen von Anfang an nichtflüchtig zu speichern. Dadurch wird sichergestellt, daß die gespeicherten Informationen auch bei einer unfallbedingten Abtrennung der Speichereinrichtung von einer Stromversorgung nicht verloren gehen und zu einem späteren Zeitpunkt durch beispielsweise einen Unfallsachverständigen ausgelesen werden können. Zu diesem Zweck kann u. U. die gesamte Speichereinrichtung aus dem Fahrzeug herausgenommen und beispielsweise in einem Labor ausgelesen werden.

Vorteilhafterweise ist die Speichereinrichtung durch ein Gehäuse vor äußeren Einflüssen (Feuer, Wasser, mechanische Beschädigung, etc.) geschützt. Auf diese Weise wird gewährleistet, daß die Speichereinrichtung und somit die gespeicherten Informationen während eines Unfalls nicht durch einen der genannten Einflüsse verloren gehen, sondern zum Zweck der Rekonstruktion des Unfallhergangs zu einem späteren Zeitpunkt auslesbar bleiben.

Die erfindungsgemäße optoelektronische Erfassungseinrichtung umfasst einen Laserscanner. Auch mehrere Laserscanner können beispielsweise vorne und hinten am Fahrzeug oder in den Eckbereichen des Fahrzeugs angeordnet sein. Je nach Anordnung und Aufgabe der Laserscanner können diese einen Winkelbereich von 90°, 180° oder größer abdecken. Dabei kann es sich um ein- oder mehrzeilige Laserscanner handeln, welche die Fahrzeugumgebung in entsprechend einer oder mehreren Ebenen überwachen.

Für einen erfindungsgemäß zum Einsatz gelangenden Laserscanner können beispielsweise gepulste Halbleiterlaser verwendet werden, die mit einer Scanfrequenz von über 10 Hz und einer Scandichte von mehr als 1 Puls/Grad scannen. Geeignete Laser können zum Beispiel mit einer Frequenz von 14,4 kHz Pulse im Infrarotbereich, beispielsweise mit einer Wellenlänge von 905 nm oder 1500 nm, aussenden. Die ausgesendeten Lichtpulse werden durch ein sich drehendes Prisma, einen sich drehenden Spiegel oder einen sich drehenden Meßkopf in die zu überwachende Fahrzeugumgebung gelenkt. Das Prisma, der Spiegel oder der Meßkopf können sich beispielsweise mit einer Frequenz von 10 Hz, 20 Hz oder 40 Hz drehen, so daß bei einer Pulsfrequenz des Lasers von 14,4 kHz eine Winkelauflösung von 0,25°, 0,5° bzw. 1° bei einer Rundumüberwachung von 360° erreicht werden kann.

Die durch den oder die Laser ausgesendeten und durch das Prisma oder den Spiegel umgelenkten Lichtpulse werden an sich in der Umgebung des Fahrzeuges befindlichen Objekten oder Personen reflektiert, von einer entsprechend ausgebildeten Detektoreinheit detektiert und in einer Auswerteeinrichtung ausgewertet. Über die Laufzeit der Lichtpulse ist der Abstand zu den Objekten oder Personen, an denen die Lichtpulse reflektiert werden, bestimmbar. Über Abstand und Winkel kann dann z.B. mittels Polarkoordinaten auf die Position von in der Umgebung des Fahrzeuges befindlichen Objekten oder Personen zurück geschlossen werden.

In der Auswerteeinrichtung kann ein Algorithmus zur Mustererkennung vorgesehen sein, der insbesondere anhand der zeitlichen Variation der detektierten Abbildungen der Umgebung Hypothesen darüber aufstellt, ob es sich bei einem detektierten Objekt beispielsweise um ein Auto, ein Motorrad oder einen Menschen handelt. Wird beispielsweise ein vorausfahrendes Objekt in der Größe eines PKW detektiert, so wird zunächst davon ausgegangen, daß es sich um einen PKW handelt. Teilt sich das Objekt jedoch im Laufe der nachfolgenden Messungen in zwei kleinere Einzelobjekte auf, so wird die Hypothese dahingehend korrigiert, daß es sich um zwei Motorräder handelt, etc. Auf diese Weise findet eine ständige Überwachung der Fahrzeugumgebung sowie eine ständige Anpassung bzw. Korrektur der Musterhypothesen statt.

In einer vorteilhaften Variante der Erfindung umfaßt die Erfassungseinrichtung zusätzlich zum Laserscanner wenigstens eine Videokamera, deren Bilder von der Fahrzeugumgebung ebenfalls in der Speichereinrichtung speicherbar sind. Die Videokamera kann beispielsweise eine CCD-Kamera sein, deren Bilder synchron zu den durch einen Laserscanner ermittelten Informationen gespeichert werden. Eine derartige Kamera kann die Identifizierung der an einem Unfall beteiligten Objekte und Personen erleichtern.

Weiterer Gegenstand der Erfindung ist ein Verfahren zum Speichern von Informationen in einer Speichereinrichtung einer optoelektronischen Erfassungseinrichtung eines Kraftfahrzeuges mit den Merkmalen des Anspruchs 13.

Bei dem erfindungsgemäßen Verfahren werden während des Betriebs des Fahrzeuges kontinuierlich oder in zeitlich kurzen Abständen von der als Laserscanner ausgebildeten optoelektronischen Erfassungseinrichtung erfaßte, die Fahrzeugumgebung betreffende Informationen in der eine begrenzte Speicherkapazität aufweisenden Speichereinrichtung gespeichert und bei Überschreiten der maximalen Speicherkapazität die älteste gespeicherte Information durch eine neue zu speichernde Information überschrieben.

Durch das erfindungsgemäße Verfahren werden die voranstehend genannten Vorteile der erfindungsgemäßen optoelektronischen Erfassungseinrichtung bei der Speicherung von die Fahrzeugumgebung betreffenden Informationen, insbesondere Abstands- und/oder Positionsinformationen, erzielt.

In einer vorteilhaften Variante des Speicherverfahrens werden zusätzlich fahrzeugspezifische Informationen wie Fahrzeuggeschwindigkeit, Beschleunigung, etc., in der Speichereinrichtung gespeichert. Die Auswertung der die Fahrzeugumgebung betreffenden Information unter Berücksichtigung der das eigene Fahrzeug betreffenden Informationen ermöglicht eine verbesserte Rekonstruktion eines Unfallherganges.

Bevorzugt wird der Speichervorgang durch ein vorbestimmtes, beispielsweise unfallbedingtes Ereignis und insbesondere bei Auslösung eines Airbags abgebrochen. Auf diese Weise wird sichergestellt, daß der Speichervorgang nicht nach einem Unfall fortgesetzt wird, was zu einem Überschreiben unfallrelevanter Informationen durch belanglose Informationen aus der Zeit nach dem Unfall führen würde.

In einer weiteren Variante des erfindungsgemäßen Verfahrens wird der Speichervorgang mit einer insbesondere konstanten zeitlichen Verzögerung gegenüber dem vorbestimmten Ereignis abgebrochen. Auf diese Weise können Bewegungen von an einem Unfall beteiligten Objekten oder Personen bis zu ihrem Stillstand aufgezeichnet werden.

Besonders vorteilhaft ist es, wenn der Speicherinhalt nach einem Abbruch des Speichervorgangs bis zu einem Auslesen des Speichers statisch gespeichert bleibt. Dies gewährleistet den Erhalt und das Auslesen des Speicherinhalts zu einem späteren Zeitpunkt nach dem Unfall auch in dem Fall, daß die Speichereinrichtung durch den Unfall von einer Stromversorgung getrennt wurde.

## Patentansprüche

1. Optoelektronische Erfassungseinrichtung für ein Kraftfahrzeug mit einer Speichereinrichtung, in der während des Betriebs des Kraftfahrzeuges kontinuierlich oder in zeitlich kurzen Abständen von der als Laserscanner ausgebildeten optoelektronischen Erfassungseinrichtung erfaßte, die Fahrzeugumgebung betreffende Informationen speicherbar sind, wobei die Menge der in der Speichereinrichtung speicherbaren Informationen begrenzt ist und bei voller Speichereinrichtung die jeweils älteste gespeicherte Information durch eine neue zu speichernde Information überschreibbar ist.

2. Erfassungseinrichtung nach Anspruch 1,
**dadurch gekennzeichnet,**
**daß** die Speichereinrichtung einen Ringspeicher aufweist und insbesondere als Ringspeicher aufgebaut ist.

3. Erfassungseinrichtung nach Anspruch 1,
**dadurch gekennzeichnet,**
**daß** die Speichereinrichtung ein nach dem FIFO-Prinzip arbeitendes Schieberegister aufweist.

4. Erfassungseinrichtung nach einem der vorherigen Ansprüche,
**dadurch gekennzeichnet,**
**daß** die Speichereinrichtung mit einer Fahrzeugelektronik verbunden ist.

5. Erfassungseinrichtung nach einem der vorherigen Ansprüche,
**dadurch gekennzeichnet,**
**daß** in der Speichereinrichtung von dem Laserscanner gelieferte Abstandsinformationen und/oder Positionsinformationen und/oder Abstands-/Winkelinformationen (Polarkoordinaten) speicherbar sind.

6. Erfassungseinrichtung nach einem der vorherigen Ansprüche,
**dadurch gekennzeichnet,**
**daß** in der Speichereinrichtung zusätzlich zu den von dem Laserscanner gelieferten Informationen fahrzeugspezifische Informationen, wie Fahrzeuggeschwindigkeit, Beschleunigung, Lenkwinkel, Bremskraft, etc., speicherbar sind.

7. Erfassungseinrichtung nach einem der vorherigen Ansprüche,
**dadurch gekennzeichnet,**
**daß** der Speichervorgang durch mindestens ein vorbestimmtes Ereignis und insbesondere durch eine unfallbedingte Beschleunigung oder Verzögerung des Fahrzeuges abbrechbar ist.

8. Erfassungseinrichtung nach Anspruch 7,
**dadurch gekennzeichnet,**
**daß** der Speichervorgang mit einer insbesondere konstanten zeitlichen Verzögerung gegenüber dem vorbestimmten Ereignis abbrechbar ist.

9. Erfassungseinrichtung nach Anspruch 7 oder 8,
**dadurch gekennzeichnet,**
**daß** der Speichervorgang durch den Auslösemechanismus eines Airbags abbrechbar ist.

10. Erfassungseinrichtung nach einem der vorherigen Ansprüche,
**dadurch gekennzeichnet,**
**daß** die gespeicherten Informationen nach einem Abbruch des Speichervorgangs statisch speicherbar und durch eine externe Ausleseeinrichtung auslesbar sind.

11. Erfassungseinrichtung nach einem der vorherigen Ansprüche,
**dadurch gekennzeichnet,**
**daß** die Speichereinrichtung durch ein Gehäuse vor äußeren Einflüssen (Feuer, Wasser, mechanische Beschädigung, etc.) geschützt ist.

12. Erfassungseinrichtung nach einem der vorherigen Ansprüche,
**dadurch gekennzeichnet,**
**daß** sie zusätzlich wenigstens eine Videokamera umfaßt, deren Bilder von der Fahrzeugumgebung ebenfalls in der Speichereinrichtung speicherbar sind.

13. Verfahren zum Speichern von Informationen in einer Speichereinrichtung einer optoelektronischen Erfassungseinrichtung eines Kraftfahrzeuges, bei dem
während des Betriebs des Fahrzeuges kontinuierlich oder in zeitlich kurzen Abständen von der als Laserscanner ausgebildeten optoelektronischen Erfassungseinrichtung erfaßte, die Fahrzeugumgebung betreffende Informationen in der eine begrenzte Speicherkapazität aufweisenden Speichereinrichtung gespeichert werden, und
bei Überschreiten der maximalen Speicherkapazität die älteste gespeicherte Information durch eine neue zu speichernde Information überschrieben wird.

14. Speicherverfahren nach Anspruch 13,
**dadurch gekennzeichnet,**
**daß** in der Speichereinrichtung von dem Laserscanner gelieferte Abstandsinformationen und/oder Positionsinformationen und/oder Abstands-/Winkelinformationen (Polarkoordinaten) gespeichert werden.

15. Speicherverfahren nach einem der Ansprüche 13 oder 14,
**dadurch gekennzeichnet,**
**daß** zusätzlich fahrzeugspezifische Informationen, wie Fahrzeuggeschwindigkeit, Beschleunigung, etc., in der Speichereinrichtung gespeichert werden.

16. Speicherverfahren nach einem der Ansprüche 13 bis 15,
**dadurch gekennzeichnet,**
**daß** der Speichervorgang durch ein vorbestimmtes, beispielsweise unfallbedingtes Ereignis und insbesondere bei Auslösung eines Airbags abgebrochen wird.

17. Speicherverfahren nach Anspruch 16,
**dadurch gekennzeichnet,**
**daß** der Speichervorgang mit einer insbesondere konstanten zeitlichen Verzögerung gegenüber dem vorbestimmten Ereignis abgebrochen wird.

18. Speicherverfahren nach einem der Ansprüche 13 bis 17,
**dadurch gekennzeichnet,**
**daß** der Speicherinhalt nach einem Abbruch des Speichervorgangs bis zu einem Auslesen des Speichers statisch gespeichert bleibt.
